# EUROPEAN PATENT APPLICATION

(11) **EP 1 862 568 A1**
(43) Date of publication of application: **05.12.2007**
(21) Application number: 06011121.8
(22) Date of filing: 30.05.2006
(51) Int. Cl.: C23C 30/00

(54) **Thermal barrier coating with tungsten-bronze structure**

(71) Applicant: SIEMENS AKTIENGESELLSCHAFT, 80333 München (DE)
(72) Inventor: Kulkarni, Anand A., 32828 Orlando, FL (US); Lampenscherf, Stefan, Dr., 85586 Poing (DE); Naeini, Ashkan, Dr., 80689 München (DE); Subramanian, Ramesh, Dr., 10777 Berlin (DE)

(57) **Abstract**

The application relates to a thermal barrier coating the tungsten bronze the structure.

## Description

Thermal Barrier Coating (TBC) systems have been readily employed on first and second rows of turbine blades and vanes as well as on combustor chamber components exposed to the hot gas path of industrial gas turbines (IGT). Typically, yttria stabilized zirconia TBCs are extensively applied to the hot sections and provide protection against thermo-mechanical shock, high temperature oxidation and hot corrosion degradation. While the primary driver to implement TBCs has been initially the life time extension of the coated components, advanced IGTs utilize TBCs more and more to allow for increases in efficiency and power output of a gas turbine. One measure to improve efficiency and power output is to reduce the cooling air consumption of the components in the hot gas path, i.e. by allowing those components to be operated at higher temperatures. The push to higher firing temperatures and reduced cooling flows generates an on-going demand for advanced TBCs with higher temperature stability and better thermal insulation to achieve long term efficiency and performance goals of advanced industrial gas turbines.

Thermal Barrier Coating (TBC) systems have been readily employed on first and second rows of turbine blades and vanes as well as on combustor chamber components exposed to the hot gas path of industrial gas turbines (IGT). Typically, yttria stabilized zirconia TBCs are extensively applied to the hot sections and provide protection against thermo-mechanical shock, high temperature oxidation and hot corrosion degradation. While the primary driver to implement TBCs has been initially the life time extension of the coated components, advanced 1GTs utilize TBCs more and more to allow for increases in efficiency and power output of a gas turbine. One measure to improve efficiency and power output is to reduce the cooling air consumption of the components in the hot gas path, i.e. by allowing those components to be operated at higher temperatures. The push to higher firing temperatures and reduced cooling flows generates an on-going demand for advanced TBCs with higher temperature stability and better thermal insulation to achieve long term efficiency and performance goals of advanced industrial gas 9 turbines.

The TBC comprises a two-layer system: an outer insulating ceramic layer and an underlying oxidation-resistant metallic layer (bond coat) deposited directly onto the surface of the metallic component. The bond coat provides the physical and chemical bond between the ceramic coating and the substrate and serves as an oxidation and corrosion resistance by forming a slow growing adherent protective Alumina scale. The top ceramic layer provides benefits in performance, efficiency and durability through a) increased engine operating temperature; b) extended metallic component Iifetime when subjected to elevated temperature and stress; and C) reduced cooling requirements for the metallic components. Depending on the ceramic layer thickness and through thickness heat flux, substrate temperatures can be reduced by several hundred degrees. The development and acceptance of TBCs are closely linked to processing technology: in this connection, ceramic topcoats are presently deposited using air plasma Spray (APS) or electron beam-physical vapor deposition (EB-PVD) processes. Although both coatings have the same chemical composition, their microstructures are fundamentally different from each other and so are their thermal insulation properties and performance.

The desired increase in operating temperature is accomplished to a great extend by taking credit for the superior temperature capability of the ceramic TBC system in conjunction with its excellent thermal insulation behaviour due to its low thermal conductivity improvement of the thermal insulation of the TBC can be achieved by increasing the TBC thickness, modification of the TBC microstructure (e.g. porosity) or by using materials with lower bulk thermal conductivity. The objective of this invention is to explore a new class of potential TBC material compositions with lower lattice thermal conductivity, improved high temperature thermo-mechanical properties and phase stability.

Present day TBCs are comprised of a two-layer coating system on a superalloy turbine blade substrate. The materials of interest for such systems are MCrAlY (where M is Ni, Co, etc.) alloys or Pt-AI based oxidation-resistant bond-coats followed by an yttria-stabilized zirconia (YSZ) ceramic topcoat. The development and acceptance of TBCs are closely linked to processing technology: in this connection, ceramic topcoats are presently deposited using air plasma Spray (APS) or electron beam-physical vapor deposition (EB-PVD) processes. Although both coatings have the same chemical composition, their microstructures are fundamentally different from each other and so are their thermal insulation properties and performance.

Depending on the ceramic layer thickness and through thickness heat flux, substrate temperatures can be reduced by several hundred degrees. This increase in operating temperature is accomplished to a great extend by taking credit for the superior temperature capability of the ceramic TBC system in conjunction with its excellent thermal insulation behaviour due to its low thermal conductivity. Improvement of the thermal insulation of the TBC can be achieved by increasing the TBC thickness, modification of the TBC microstructure (e.g. porosity) or by using materials with lower bulk thermal conductivity. The bulk properties of ceramics can be altered by ionic substitution of multivalent cations, thus providing further reduction in thermal properties along with sintering resistance. In YSZ, the introduction of a stabilizer decreases the thermal conductivity of pure zirconia. This is attributed to the fact that the incorporation of hetero-elements is accompanied by the introduction of vacancies to maintain the electrical neutrality of the ionic lattice. Thus, the substitution of two zirconium ions (tetravalent) by two yttrium ions (trivalent) is accompanied by the introduction of one vacancy according the following reaction, using the Kroger and Vink's notations: Y,03 -+ 2~; + *V*; + 300, where Y,,' is an yttrium ion on a zirconium site (single negative charge), V,' an oxygen vacancy Mice positively charged and 0: an oxygen ion on an oxygen site (no charge). These vacancies act as scattering centers for the propagation of phonons. However, thermal degradation of the YSZ-based TBCs has brought up the consideration of new coating compositions that show high phase stability and better thermal insulation at temperatures above 1200°C, which in turn aid to achieve long term efficiency and performance goals of advanced industrial gas turbines.

### The invention is now described:

The current invention suggests to improve the thermal insulation of the TBC by using tungsten bronze structured ceramic coating material with a lower bulk thermal conductivity. This material class has been extensively used as high dielectric micro-wave ceramics with a very low thermal coefficient of permittivity (TC€) and high quality factor (Q-factor). Microwave materials are especially promising candidates for future low-K TBC applications because of their negligible intrinsic optical phonon-phonon coupling. Additionally, the above mentioned compounds are in accordance to the selection rules established by Clarks' semi-classical thermal conductivity model (see C. Levi, Solid Sfafe & Material Science, 2004) for low-K TBC compounds. Typically these structures have excellent thermal, physical and mechanical properties. A combination of large complex unit cells with strongly anisotropic atomic bonding combined with high atomic mass makes them an ideal candidate for reduced thermal conductivity.

They are typically represented as Ba0 - Re203 - xTi02 (X = 2 - 5) where Re represents rare earth lanthanide cation (from La up to Lu, typically La, Nd, Gd, Sm etc..). The properties of these ceramics strongly depend on their crystal structure, stoichiometry and phase composition. The crystal structure of Ba0-Re203-xTi0, changes with varying Ti02 content. Compounds with X = 4 and 5 (BaReTi4 and BaReTi5) exhibit a structure with several tilted oxygen's octahedrons (similar to a complex perovskite structure) and different kind of vacancies partially occupied by heavy ions like barium and rare earths. In contrast, the crystal structure of compounds with a lower Ticontent (X = 2 and 3) exhibits abigned layers of oxygen's octahedrons with intermediate Barium layers.

Apart from the thermo-mechanical properties, the new TBCs also exhibit excellent phase stability over the operating temperature range, improved sintering resistance in extreme environments in the turbine section and are compatible with conventional or new bond coat and superalloy materials.

The current invention suggests to improve the thermal insulation of the TBC by using tungsten bronze structured ceramic coating material with a lower bulk thermal conductivity. Typically these structures have excellent thermal, physical and mechanical properties. A combination of large complex unit cells with strongly anisotropic atomic bonding combined with high atomic mass makes them an ideal candidate for reduced thermal conductivity. They are typically represented as Ba0 - Re203 - xTi02 (X = 2 - 5) where Re represents rare earth lanthanide cation (from La up to Lu, typically La, Nd, Gd, Sm etc..). The properties of these ceramics strongly depend on their crystal structure, stoichiometry and phase composition. The crystal structure of BaO-Re203- xTi02 changes with varying Ti02 content. Compounds with X = 4 and 5 (BaReTi4 and BaReTi5) exhibit a structure with several tilted oxygen's octahedrons (similar to a complex perovskite structure) and different kind of vacancies partially occupied by heavy ions like barium and rare earths. In contrast, the crystal structure of compounds with a lower Ti-content (X = 2 and 3) exhibits aligned layers of oxygen's octahedrons with intermediate Barium layers. Apart from the thermo-mechanical properties, the new TBCs also exhibit excellent phase stability over the operating temperature range, improved sintering resistance in extreme environments in the turbine section and are compatible with conventional or new bond coat and superalloy materials.
- In the general formula AO - B,O, - C,O,, the properties of the oxides depend on the nature of the A1 B and C ions and also on the valence state on the ions. With the substitution of the Al B or C ions, it is possible to create and suppress oxygen vacancies in the structure, thus altering the bulk properties of the material. Partial or complete substitution of a site with a 2+ or I + cation will result in increase phonon scattering due to more atomic disorder in the system (for e.g. substitution of large Ba ion with smaller 2+ cation or I + cation). The 2+ cation can include Mg, Ca, Sr etc and I+ cation can include Li, Na, K etc. B site typically represents rare earth lanthanide cation (from La up to Lu, typically La, Nd, Gd, Sm, Dy, Er etc..). Partial or complete substitution of B site with a 2+ or 3+ cation will result in increase phonon scattering due to more atomic disorder and increased vacancy concentration in the system. The 2+ cation can include Co, Mn etc and the 3+ cation can include a fellow lanthanide cation or one from Sc, Y, A1, Ga, In. C site is typically ~ i ~ ' in this case. However, partial or complete substitution of C site with a 4+ or 5+ cation will result in increase phonon scattering due to more atomic disorder and increased *P*--. vacancy concentration in the system. The 4+ cation can include Zr, Hf, Ce and Th and the 5+ cation can Nb or Ta. With the formation of the higher vacancy concentration, formation of vacancy pairs or clusters can result in "atomic level porosity". From literature it is well known that formation of nano-pores can result in significant conductivity decrease - atomic level porosity can further contribute in this direction. Another possible advantage is the reduction in the diffusion coefficients of clusters, thereby increasing the inherent sintering resistance of the material. Furthermore, increasing defect concentrations can have an effect on the thermal expansion of the material - increasing defect concentration can lead to increasing thermal expansion. With the reduction in thermal conductivity, this can lead to a lower thermal shock capability. Therefore, a systematic study of the relationship between the other material property changes and thermal conductivity needs to be considered. A number of combination of the systems can be obtained through one or more substitutions of elements in the crystal structure. The final selection of TBCs will be based upon optimal combination of bulk properties and also the process capabilities for depositing the coatings.

The nature of the invention is to utilize the advantageous intrinsic properties of low loss A microwave ceramics as potential candidates for very low-k materials. The improvement of thermal insulation along with higher temperature stability of TBCs will allow to achieve long term efficiency and performance goals of advanced industrial gas turbines providing a cost effective, efficient and environmentally sound power generation solution.

The nature of the invention is to utilize the advantageous intrinsic properties of low loss microwave ceramics with Tungsten Bronze structure as potential candidates for very low-k materials and to improve the bulk properties of these ceramics by ionic substitution of multivalent cations, thus providing further reduction in thermal conductivity along with an increase in sintering resistance. The improvement of thermal insulation along with higher temperature stability of TBCs will allow to achieve long term efficiency and performance goals of advanced industrial gas turbines providing a cost effective, efficient and environmentally sound power generation solution.

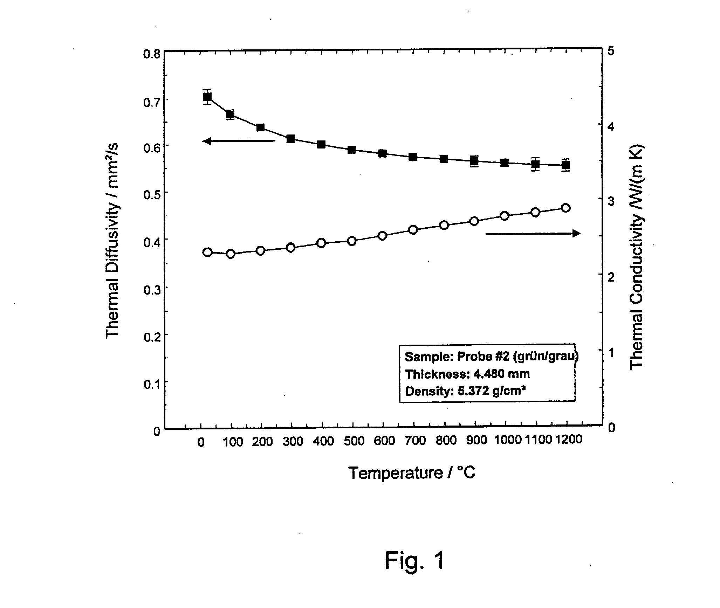

As an example fig. 1 shows the thermal conductivity and diffusivity of the composition BaNd2Ti4012 as function of temperature.

## Claims

1. Thermal barrier coating with a tungsten bronze structure.
